# EUROPEAN PATENT APPLICATION

(11) **EP 1 348 845 A2**
(43) Date of publication of application: **01.10.2003**
(21) Application number: 03006575.9
(22) Date of filing: 24.03.2003
(51) Int. Cl.: F01P 3/18, B60K 11/08

(54) **Engine cooling system for rear-engine vehicle**

(30) Priority: 26.03.2002 JP 2002085589; 26.03.2002 JP 2002085590
(71) Applicant: HONDA GIKEN KOGYO KABUSHIKI KAISHA, Minato-ku Tokyo (JP)
(72) Inventor: Suzuki, Masami, Wako-shi, Saitama (JP)
(74) Representative: Prechtel, Jörg, Dipl.-Phys. Dr.

(57) **Abstract**

An engine cooling system (4) for a rear-engine vehicle in which an engine (1) is installed in a rear part of a vehicle body is made to have an inlet opening (5) formed in a side of the vehicle body, an outlet opening opened rearward or downward in the rear part of the vehicle, a duct (7, 10) for forming an air flow path between the inlet opening and the outlet opening, and a radiator (11) provided at an intermediate portion of the duct.

## Description

### BACKGROUND OF THE INVENTION

### 1. Field of the invention

The present invention relates to an engine cooling system for a rear-engine vehicle.

### 2. Description of the Related Art

In the case of so-called rear-engine vehicles (including mid-engine vehicles) in which an engine is installed in a rear part of a vehicle body, a radiator is disposed at a front part of the vehicle body or an air-cooled engine needing no radiator is installed in order to make full use of running air to cool the engine so installed.

And, cooling air to an engine compartment is taken from an opening provided in a side or a lower surface of the vehicle body by virtue of a ram pressure while the vehicle is running, but since the difference in pressure between the outside and inside of the engine compartment is not developed as much as in the case of front-engine vehicles, a sufficient amount of fresh air is difficult to be taken in. In addition, when the vehicle is stopped, since heat in the engine compartment is difficult to be drawn out of the compartment, the ventilation of the engine compartment is forcedly implemented by providing a fan.

However, with the mode in which the radiator is disposed at the front part of the vehicle body, since the distance between the engine and the radiator becomes great, the length of the piping connecting the engine with the radiator becomes also long, and as the length of the piping is increased, the amount of cooling water is increased. Thus, an increase in vehicle weight cannot be avoided. Moreover, since the position of the center of gravity is located much closer to the rear of the vehicle body, the crosswind stability tends to be reduced.

In addition, when the radiator is disposed at the front part of the vehicle body, since not only there is required a radiator installation space equal to that of the front-engine vehicle but also an air intake scoop is required to be provided in the front of the vehicle, an expected advantage of the rear-engine vehicle that the frontal projection area is reduced by disposing the engine at the rear is reduced or eliminated.

Further, it is considered to induct cooling air intensively to a radiator using a duct.

Using a duct, however, leads to a problem associated with the ventilating resistance of the duct. For example, when the outlet opening is opened downward, there needs to devise a countermeasure against the penetration of water or pebbles raised when the vehicle runs on roads which are covered with snow or pitted with puddles into the duct, but such a countermeasure is considered to produce a ventilating resistance, which reduces the cooling efficiency.

When considering the prevention of penetration of water or pebbles into the duct, it may be good to have the outlet opening opened rearward, but in the event that the outlet opening is so opened, there may be caused a possibility that hot air that has passed through the radiator is poured on the riders of motorcycles and/or pedestrians while the vehicle is running at low speed or stopped.

### SUMMARY OF THE INVENTION

The invention was made with a view to solving the problems inherent in the related art, and a main object thereof is to provide an improved engine cooling system for a rear-engine vehicle which can increase the cooling efficiency while suppressing the increase in vehicle weight to a lowest level and can enhance the degree of freedom in designing the front part of the vehicle body.

Further, another object thereof is to provide an improved engine cooling system for a rear-engine vehicle which can be free from an increase in ventilating resistance at the time of high-speed driving even when a countermeasure is taken to prevent the penetration of raised water or pebbles into the duct and which can avoid the possibility of hot air being poured on the riders of motorcycles and/or pedestrians when the vehicle is running at low speed or stopped.

With a view to attaining the object, according to a first aspect of the invention, there is provided an engine cooling system 4 for a rear-engine vehicle in which an engine 1 is installed in a rear part of a vehicle body having an inlet opening 5 formed in a side of the vehicle body, an outlet opening opened rearward or downward in the rear part of the vehicle, a duct 7, 10 for forming an air flow path between the inlet opening and the outlet opening, and a radiator 11 provided at an intermediate portion of the duct.

According to the construction, since cooling air inducted into the radiator is drawn out by virtue of vacuum produced under the rear part of the vehicle body after having passed through the radiator, hot air is prevented from being applied to the engine main body.

In addition, according to a second aspect of the invention, there is provided an engine cooling system for a rear-engine vehicle as set forth in the first aspect of the invention, wherein the radiator is arranged such that an air receiving surface 16 thereof faces the side of the vehicle body, and wherein a guide member (fins 17) for guiding airflows to the air receiving surface is provided in the interior of the duct. According to the construction, the cooling efficiency can be increased while minimizing the radiator installation space.

Furthermore, according to a third aspect of the invention, there is provided an engine cooling system for a rear-engine vehicle as set forth in the first or second aspect of the invention, wherein a grating member 4 is provided at the outlet opening. According to the construction, the penetration of dust, pebbles and water into the duct can be prevented, and discharged airflows can be directed to the vacuum area by setting the angle of inclination of the grating.

Moreover, according to a fourth aspect of the invention, there is provided an engine cooling system for a rear-engine vehicle as set forth in any one of the first to third aspects of the invention, wherein the engine cooling system is installed within a rear fender 2. According to the construction, the reduction in volumetric capacity of a luggage compartment can be suppressed by making effective use of the space in the rear part of the vehicle body, and moreover, the degree of freedom in designing the front part of the vehicle body does not have to be lost.

In addition, according to a fifth aspect of the invention, there is provided an engine cooling system for a rear-engine vehicle as set forth in any one of the first to fourth aspects of the invention, further comprising a valve member 21 for opening and closing the outlet opening 22 opened rearward.

According to the construction, cooling air that has passed through the radiator can be discharged rearward, as well when the vehicle is running at normal speed, whereas when the vehicle is at rest, the cooling air can be mainly discharged downward.

### BRIEF DESCRIPTION OF THE DRAWINGS

Fig. 1 is a plan view of a main part of a vehicle according to a first embodiment of the invention;
Fig. 2 is a side view of the main part of the vehicle shown in Fig. 1;
Fig. 3 is an exploded perspective view of an engine cooling system according to the first embodiment;
Fig. 4 is a schematic horizontal sectional view showing a connecting portion between a duct and a radiator;
Fig. 5 is a plan view of a main part of a vehicle according to a second embodiment of the invention;
Fig. 6 is a side view of the main part of the vehicle shown in Fig. 5; and

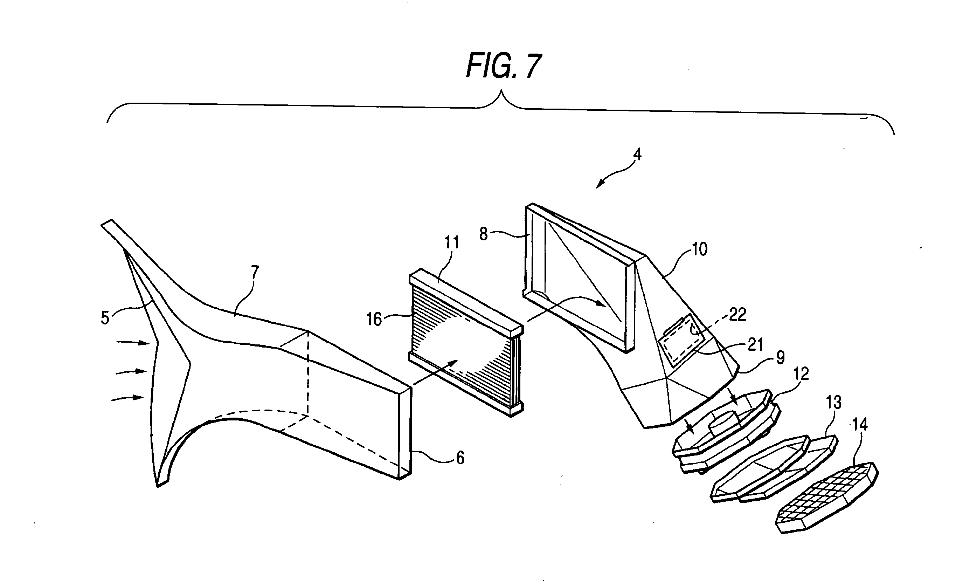

Fig. 7 is an exploded perspective view of an engine cooling system according to the second embodiment.

### DETAILED DESCRIPTION OF THE PREFERRED EMBODIMENTS

The invention will be described in detail below with reference to the accompanying drawings.

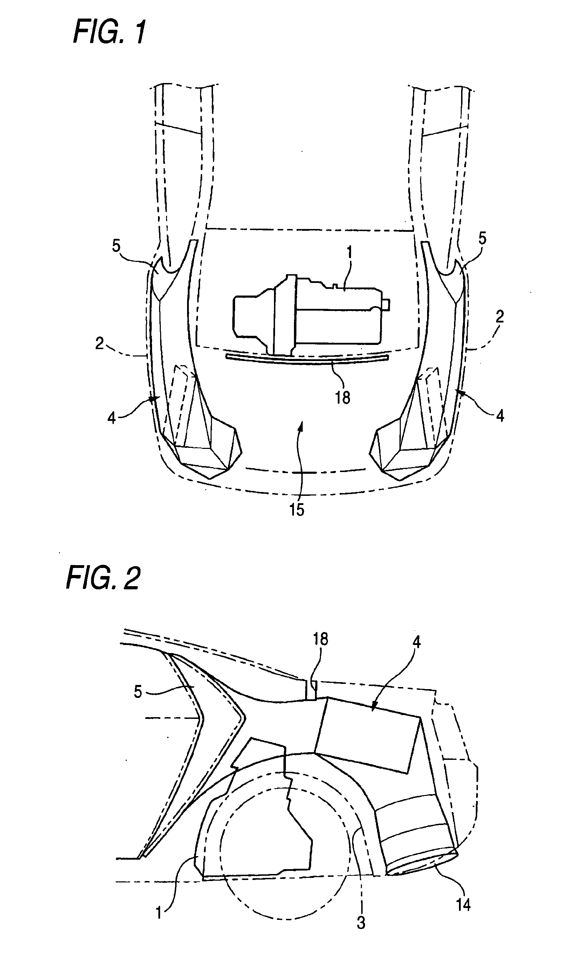

Figs. 1 and 2 schematically show the construction of a rear-engine vehicle according to a first embodiment of the invention to which an engine cooling system is applied. This rear-engine vehicle includes an in-line multi-cylinder engine 1 installed transversely on a rear axle and an engine cooling system 4 provided inside a rear fender 2 which is expanded slightly outwardly in such a manner as to extend along the outer circumference of a wheel house 3. In addition, although not clearly shown in the figures, most of a lower surface of the vehicle body is covered with an under cover, so that an airflow produced underneath the lower surface of the vehicle body while the vehicle is running is not disturbed to thereby increase the velocity of the airflow so produced, thereby making it possible to generate a vacuum condition underneath the lower surface of the vehicle body.

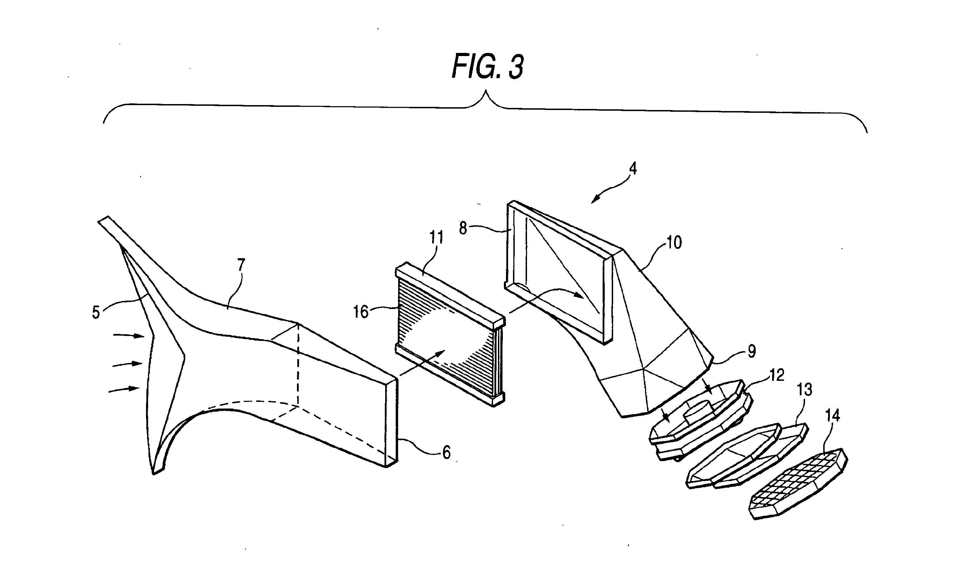

As shown also in Fig. 3, the engine cooling system 4 includes an upstream-side duct member 7, a downstream-side duct member 10, a radiator 11, a shrouded axial flow fan 12 and a grating member 14. The upstream-side duct member has an inlet opening 5 which is provided at a front end thereof and is opened forward and a radiator connecting opening 6 which is provided at a rear end thereof and is opened inwardly. The downstream-side duct member 10 has a radiator connecting opening 8 which is provided at an upper end thereof and is opened outwardly and a fan connecting opening 9 provided at a lower end thereof. The radiator 11 is provided so as to be held between the radiator connecting openings 6, 8 of both the duct members 7, 10. The shrouded axial flow fan 12 is connected to the fan connecting opening 9 situated at the lower end of the downstream-side duct member 10. The grating member 14 is connected to an outlet of the axial flow fan 12 via a short connecting duct 13.

Thus, the engine cooling system 4 is installed in an upper part of the wheel house 3 inside the rear fender 2 which would otherwise be almost a dead space, whereby the reduction in volumetric capacity of a luggage compartment defined rearward of the engine 1 is suppressed to a minimum level by making effective use of the space.

In addition, the inlet opening 5 of the upstream-side duct member 7 opens sideways at a position of the vehicle body which is rearward of the center of gravity, and a force which can cancel a leeward moment produced when crosswind is applied to the vehicle is expected to be generated by taking in cooling air from this inlet opening 5. Namely, the duct construction according to the invention can contribute to the improvement of the crosswind stability.

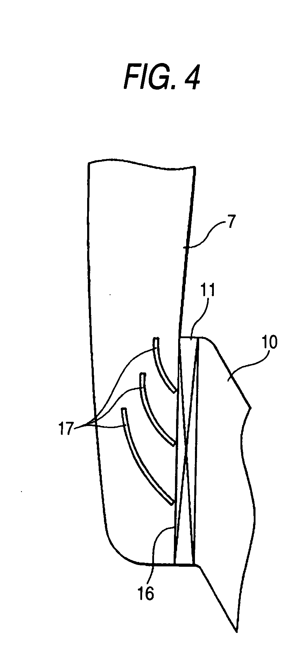

The radiator 11 is disposed such that an air receiving surface 16 thereof faces the side of the vehicle body. As shown in Fig. 4, guide fins 17 for guiding airflows to the air receiving surface 16 are provided at positions on an inner surface of the upstream-side duct member 7 which confront the air receiving surface 16 of the radiator 11. Thus, the cooing efficiency of the radiator 11 is attempted to be increased within the minimum installation space by smoothly guiding airflows to the radiator 11 within the narrow space.

The grating member 14 provided at a most downstream end or an outlet of the downstream-side duct member 10 functions to prevent the penetration of dust, pebbles and water into the duct. In addition, thin plates constituting the grating are inclined such that lower ends thereof face the rear of the vehicle, and by setting the angle of the inclination, the thin plates are designed such that discharged airflows are directed to a vacuum area generated under the rear part of the vehicle body by airflows flowing underneath the lower surface of the vehicle body at high flow velocity, whereby an increase in ventilating efficiency of the duct is attempted.

In addition, while fresh air taken in from the inlet opening 5 opened in the side of the vehicle body passes through the radiator 11 and becomes hot air, this hot air is passed through the downstream-side duct member 10 and is then discharged toward below the rear part of the vehicle body. Namely, hot air which has passed through the radiator 11 is designed not to be directed to the engine 1, whereby the ambient temperature around the engine 1 is attempted not to be increased.

Aslit-like opening 18 is provided in anupper surface of the vehicle body at a position situated above the engine 1. Hot air staying around the engine 1 while the vehicle is stopped is dissipated from this opening 18 to the outside of the vehicle by virtue of convention, whereas while the vehicle is running, air flowing over the upper surface of the vehicle body is drawn from the opening 18 to the circumference of the engine 1 by virtue of vacuum generated under the rear part of the vehicle body by airflows flowing under the lower surface of the vehicle body at high flow velocity, whereby not only the cooling efficiency of the engine 1 is attempted to be increased further but also the running stability at the time of high-speed driving is attempted to be increased by causing a downforce to be applied to the rear part of the vehicle body.

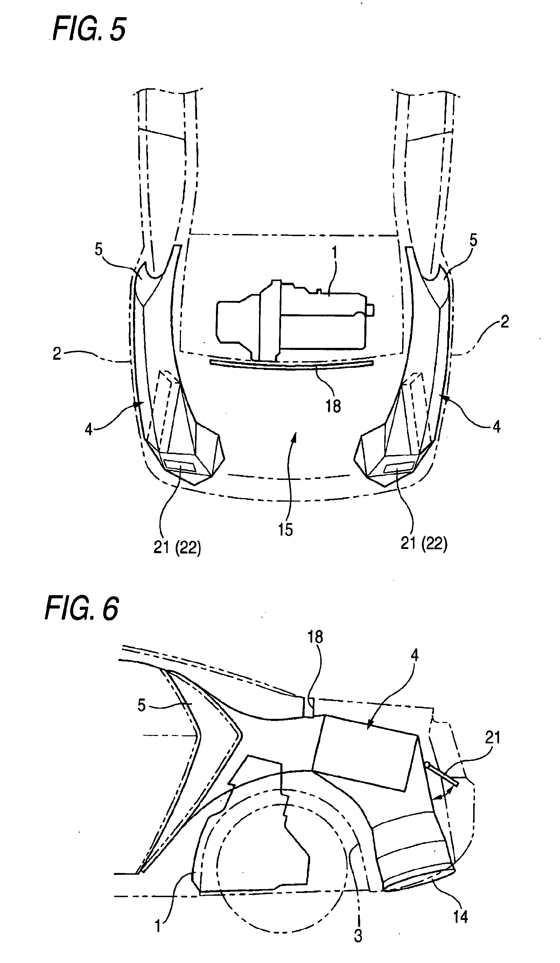

Figs. 4 to 6 schematically show the construction of a rear-engine vehicle according to a second embodiment of the invention to which an engine cooling system is applied. In addition to the first embodiment of the invention, this rear-engine vehicle includes an opening 22 which is provided in a surface of the downstream-side duct member 11 which faces rearward and is adapted to be freely opened and closed by, for example, a flap valve 21. The flap valve 21 is driven to open and close by virtue of a difference in pressure that is generated between the outside and inside of the duce when a fan is driven or by an actuator (not shown). The flap valve 21 is designed to be closed while the vehicle is at rest or running at low speed, whereas the valve 21 is designed to be opened while the vehicle is running at a speed which is equal to or faster than a predetermined vehicle speed.

Fresh air taken in from the inlet opening 5 opened in the side of the vehicle body becomes hot air when it has passed through the radiator 11, and this hot air is discharged rearward and downward of the rear part of the vehicle body by passing through the opening 22 in the rear surface of the downstream-side duct member 10 and the grating member 14 at the most downstream end of the cooling system. Then, when the vehicle is stopped and is running at low speed, since the opening 22 is closed by the flap valve 21, the hot air is discharged downward of the rear part of the vehicle body by passing only through the grating member 14 at the most downstream end. Namely, hot air that has passed through the radiator 11 is designed not to be applied to the engine 1, whereby the increase in ambient temperature around the engine is attempted to be suppressed.

In addition, by also allowing cooling air that has passed through the radiator 11 to be discharged rearward through the opening 22 formed in the rear surface of the downstream-side duct member 10 when the vehicle is running at normal speed, the ventilating resistance of cooling air at the time of high-speed driving is designed not to be increased even when the grating member 14 is provided at the most downstream end of the downstream-side duct member 10 so as to prevent the penetration of raised water and pebbles into the duct. Then, when the vehicle is running at low speed or at rest, cooling air is designed to be discharged mainly downward, so that hot air that has passed through the radiator is not poured on the riders of motorcycles and/or pedestrians.

While only certain embodiments of the invention have been specifically described herein, it will apparent that numerous modifications may be made thereto without departing from the sprit and the scope of the invention.

An engine cooling system (4) for a rear-engine vehicle in which an engine (1) is installed in a rear part of a vehicle body is made to have an inlet opening (5) formed in a side of the vehicle body, an outlet opening opened rearward or downward in the rear part of the vehicle, a duct (7, 10) for forming an air flow path between the inlet opening and the outlet opening, and a radiator (11) provided at an intermediate portion of the duct.

## Claims

1. An engine cooling system (4) for a rear-engine vehicle in which an engine (1) is installed in a rear part of a vehicle body, comprising:
an inlet opening (5) formed in a side of the vehicle body;
an outlet opening opened to at least one of rearward and downward in the rear part of the vehicle;
a duct (7, 10) formed between said inlet opening (5) and said outlet opening for defining an air flow path; and
a radiator (11) provided at an intermediate portion of said duct.

2. The engine cooling system (4) for a rear-engine vehicle as set forth in Claim 1, wherein said radiator (11) is arranged such that an air receiving surface (16) thereof faces the side of the vehicle body, and
wherein a guide member (17) for guiding airflows to said air receiving surface (16) is provided in the interior of said duct (7).

3. The engine cooling system (4) for a rear-engine vehicle as set forth in Claim 1 or 2, wherein a grating member (14) is provided at said outlet opening.

4. The engine cooling system (4) for a rear-engine vehicle as set forth in any one of Claims 1 to 3, wherein said engine cooling system (4) is installed within a rear fender (2).

5. The engine cooling system (4) for a rear-engine vehicle as set forth in any one of Claims 1 to 4, further comprising:
a valve member (21) for opening and closing said outlet opening (22) opened rearward.

6. The engine cooling system (4) for a rear-engine vehicle as set forth in any one of Claims 1 to 5, wherein the engine cooling system (4) is installed in an upper part of a wheel house (3) inside a rear fender (2).
